# EUROPÄISCHE PATENTSCHRIFT

(11) **EP 3 853 995 B1**
(45) Veröffentlichungstag und Bekanntmachung des Hinweises auf die Patenterteilung: **07.06.2023**
(21) Anmeldenummer: 19786262.6
(22) Anmeldetag: 19.09.2019
(51) Int. Cl.: H02S 20/21

(54) **WANDELEMENT**
WALL ELEMENT
ÉLÉMENT MURAL

(30) Priorität: 19.09.2018 AT 508012018
(43) Veröffentlichungstag der Anmeldung: 28.07.2021
(73) Patentinhaber: WAKONIG, Martin, 1190 Wien (AT)
(72) Erfinder: WAKONIG, Martin, 1190 Wien (AT)
(74) Vertreter: SONN Patentanwälte OG
(86) Internationale Anmeldenummer: PCT/AT2019/060309
(87) Internationale Veröffentlichungsnummer: WO 2020/056441

(56) Entgegenhaltungen:
- GB-A- 2 002 837
- KR-A- 20110 071 418
- KR-A- 20180 022 124

## Beschreibung

Die Erfindung betrifft ein Wandelement für eine Lärmschutzwand, wobei das Wandelement einen Körper aufweist und zumindest eine Außenseite hat, wobei der Körper zu der zumindest einen Außenseite hin ein Auflager aufweist, wobei auf dem Auflager zumindest ein Solarmodul angeordnet und mit dem Körper verbunden ist, wobei das Solarmodul in Bezug auf eine Vertikale in Richtung einer Oberseite des Wandelements geneigt ist, wobei der Körper auf der zumindest einen Außenseite zumindest eine für ankommenden Schall direkt erreichbare Schallabsorptionsoberfläche aufweist.

Eine Verknüpfung von Lärmschutzbauteilen mit Fotovoltaikmodulen und die damit verbundenen allgemeinen Vorteile sind grundsätzlich seit längerem bekannt. Ein Grundproblem bei dieser Verknüpfung besteht darin, dass die Oberfläche von Fotovoltaikmodulen im Allgemeinen schallreflektierend ist und daher mit den angestrebten Eigenschaften eines Lärmschutzbauteils diametral entgegensteht.

Eine Umgehung dieses Problems ist beispielsweise in der DE 93 18 768 U1 offenbart. Dort ist ein Fotovoltaiklaminat parallel zur Erstreckungsebene eines Lärmschutzbauteils an dessen Rückseite angeordnet. Die Vorderseite des Lärmschutzbauteils bleibt somit für die Energiegewinnung ungenutzt. Davon abgesehen kann bei einer vertikalen Anordnung des Lärmschutzbauteils aufgrund dessen dann ebenfalls vertikalen Anordnung nicht die optimale Effizienz des Fotovoltaikmoduls erreicht werden.

In einem anderen Zusammenhang, nämlich nicht für Wandelemente, sondern für bestehende Schallschutzwände ist eine Lösung dieser Probleme aus der DE 20 2011 004 458 U1 bekannt. Darin ist ein Schallschutzsystem gezeigt, bei dem mehrere Solarmodule in einer geneigten Anordnung auf einer Schallschutzwand angeordnet sind. Die Solarmodule werden dabei unabhängig von eigens vorgesehenen Schallschutzsegmenten mit einer Tragstruktur verbunden, sodass Solarmodule und Schallschutzsegmente unabhängig voneinander austauschbar sind. Dadurch ergibt sich allerdings der Nachteil, dass der Aufwand für die Montage der Schallschutzwand insgesamt deutlich höher als bei einer herkömmlichen Schallschutzwand (ohne Solarmodule) ist.

Zur Beseitigung dieses Nachteils ist bereits aus der KR 2018 0022124 A1 ein kombiniertes Wandelement bekannt, welches beide Funktionen, nämlich der Schallabsorption und der Fotovoltaik, vereint. Der Aufwand für den Aufbau einer entsprechenden Lärmschutzwand ist somit kaum höher als bei einer herkömmlichen Lärmschutzwand und umfasst darüber hinaus im Wesentlichen nur die Herstellung der elektrischen Anschlüsse. Nachteilig bei diesem Wandelement ist allerdings dessen komplexe Struktur und damit einhergehend große Anzahl an erforderlichen Komponenten sowie letztendlich die sich daraus ergebenden hohen Herstellungskosten.

Die DE 196 02 779 A1 zeigt ein Wandelement der eingangs angeführten Art, welches die oben genannten Nachteile zumindest teilweise vermeidet oder lindert. Die Wandelemente sind dabei durch Fertigbauteile gebildet, wobei die Solarmodule auf daran einstückig ausgeformten Nasen befestigt sind. Die für horizontal ankommenden Schall direkt erreichbare Oberfläche der Fertigbauteile, d. h. die nicht durch ein Solarmodul verdeckt ist, ist klein im Vergleich zur gesamten Ansichtsfläche.

In der DE 297 06 785 U1 ist eine Schallschutzwand offenbart, bei der zwischen zwei senkrecht montierten Trägern horizontale Schallschutzelemente befestigt sind. Die Schallschutzwände sind durch rechtwinkelig ungleichschenkelig prismatische Körper aufgespannt und selbsttragend in Führungen an den Trägern gestapelt. Die kleinere Prismaschenkelseite eines jeden prismatischen Körpers ist durch ein Solarpaneel gebildet und gegen oben weisend angeordnet und die längere Prismaschenkelseite ist als Schallschutzanordnung ausgebildet und nach unten gewandt angeordnet.

Die EP 1 788 155 A2 zeigt eine ökologische Lärmschutzwand in Leichtbauweise mit vertikalen, in einem Fundament verankerten Stützen und keilförmigen Schallschluckelementen, die einen schallabsorbierenden Schallschluckstoff und eine Bedachung zum Schutz gegen Witterungseinflüsse aufweisen. Dabei besteht der Schallschluckstoff aus natürlichen und nachwachsenden Rohstoffen aus Stroh, Halmen oder Fasern pflanzlichen Ursprungs.

Die GB 2 002 837 A offenbart ein Wandelement für eine Lärmschutzwand, wobei die vordere Wand eine schallreflektierende Oberfläche und eine horizontale darunter angeordnete Schalleingangsfläche aufweist.

Die KR 2011 0071418 A zeigt eine Lärmschutzwand mit geneigten Sonnenkollektoren auf einer der Schallquelle zugewandten Seite. In einem Bereich zwischen den Sonnenkollektoren sind Schallabsorber horizontal abgeordnet. Zudem ist am oberen Ende der Lärmschutzwand eine Vorrichtung zur aktiven Schallfeldsteuerung vorgesehen, um den über das obere Ende der Lärmschutzwand gebeugten Schall zu verringern.

Die aus der KR 2018 0022124 A1 und der DE 196 02 779 A1 bekannten Lösungen versuchen das eingangs erwähnte Grundproblem der durch die Verwendung von Solarmodulen verschlechterten Schallabsorptionseigenschaften der einzelnen Wandelemente dadurch zu lösen, dass der Schall jeweils in Kammern hinter den Solarmodulen umgeleitet werden soll, um ihn dort zu absorbieren. Eine solche Umleitung funktioniert allerdings in der Praxis nicht in einem ausreichenden Ausmaß, um die zunehmend restriktiveren Anforderungen an den Schallabsorptionsgrad von Lärmschutzwänden erfüllen zu können.

Es ist eine Aufgabe der Erfindung, diesen Nachteil zu beseitigen oder zumindest zu verringern.

Die Erfindung sieht ein Wandelement der eingangs angeführten Art vor, wobei die Schallabsorptionsoberfläche zumindest abschnittsweise in Bezug auf die Vertikale und/oder in Bezug auf eine Längsrichtung des Wandelements geneigt ist, wobei der Flächeninhalt der Schallabsorptionsoberfläche zumindest gleich groß wie der Flächeninhalt einer Ansichtsfläche des Wandelements ist. Die Schallabsorptionsoberfläche ist dabei jener Teil der Oberfläche des Wandelements auf dessen Außenseite abseits der Oberfläche des zumindest einen Solarmoduls, welcher für ankommenden Schall direkt erreichbar ist, d. h. ohne notwendige vorangehende Reflexion oder Umlenkung des Schalls. Durch ein Solarmodul für ankommenden Schall verdeckte Teile der Oberfläche des Wandelements sind daher nicht der Schallabsorptionsoberfläche zuzurechnen. Die Ansichtsfläche des Wandelements entspricht dem Flächeninhalt eines Umrisses des Wandelements in einer Seitenansicht auf die Außenseite. Genauer ist somit die Außenseitenansichtsfläche gemeint, d. h. in Blickrichtung normal auf die Vertikale und normal auf eine Längserstreckung des Wandelements auf die zumindest eine Außenseite. Aufgrund der zumindest abschnittsweisen Neigung der Schallabsorptionsoberfläche ist deren Flächeninhalt größer als der Flächeninhalt ihrer eigenen Ansichtsfläche. Die relative Differenz der beiden Flächeninhalte hängt vom Neigungswinkel ab. Bei einem Neigungswinkel von 45° ist das Verhältnis von Ansichtsfläche zu Oberfläche ungefähr 1:1,4 (1 zu Quadratwurzel aus 2). Daraus folgt, dass wenn ungefähr 71 % der Ansichtsfläche durch um 45° geneigte Schallabsorptionsoberflächen gebildet sind und Solarmodule die übrigen 29 % der Ansichtsfläche einnehmen, der Flächeninhalt der Schallabsorptionsoberfläche zumindest gleich groß ist wie der Flächeninhalt der Ansichtsfläche des Wandelements. Die Außenseite kann eine schallzugewandte Seite sein. Die Vertikale ist dabei jene Achse, die sich zwischen der Unterseite und der Oberseite des Wandelements erstreckt. Die Bezeichnung als "Vertikale" ist nicht einschränkend für die Verwendung des Wandelements, welches demnach auch für schräg aufgestellte Lärmschutzwände verwendet werden kann, ohne den Gegenstand des Anspruchs 1 zu verlassen. Im Fall einer typischerweise senkrecht aufgestellten Lärmschutzwand aus dem hier beschriebenen Wandelementen entspricht die Vertikale der absoluten Vertikalen der Lärmschutzwand. Die Vertikale ist beispielsweise normal auf eine Längsrichtung des Wandelements. Die Ansichtsfläche wie oben definiert entspricht dann der Fläche einer Projektion des Wandelements in eine von der Vertikalen und der Längsrichtung aufgespannten Ebene.

Der ankommende Schall (Schallimmission) erreicht die Schallabsorptionsoberfläche zwar direkt, aber nicht zwingend horizontal (normal auf die Vertikale). Da der Großteil der Schallimmission aus einem relative kleinen Bereich des Raumwinkels erwartet wird, ist es vorteilhaft, wenn der Flächeninhalt jener Abschnitte der Schallabsorptionsoberfläche, die für aus einem Lärmimmissionsbereich ankommenden Schall direkt erreichbar sind, (insgesamt) zumindest gleich groß wie der Flächeninhalt einer Ansichtsfläche des Wandelements ist, wobei der Lärmimmissionsbereich einen Winkelbereich zwischen einer Normale auf die Vertikale und einer um 70° aus dieser Normalen in Richtung einer Unterseite des Wandelements angestellten Neigung umfasst. Optional kann die obige Bedingung für den Flächeninhalt der Abschnitte der Schallabsorptionsoberfläche bereits bei einem Lärmimmissionsbereich mit einem Winkelbereich zwischen einer Normale auf die Vertikale (nachfolgend wird diese Normale kurz als 0° bezeichnet) und einer um 60° aus dieser Normalen in Richtung einer Unterseite des Wandelements angestellten Neigung erfüllt sein, oder bei einem Winkelbereich zwischen 0° und 50°, oder bei einem Winkelbereich zwischen 0° und 40°, oder bei einem Winkelbereich zwischen 0° und 30°, oder bei einem Winkelbereich zwischen 0° und 20°, oder bei einem Winkelbereich zwischen 0° und 10°.

Der Flächeninhalt der Schallabsorptionsoberfläche kann ca. dem 1,2-fachen oder mehrfachen des Flächeninhalts einer Ansichtsfläche des Wandelements entsprechen. Durch die größere Schallabsorptionsoberfläche werden die Schallabsorptionseigenschaften des Wandelements weiter verbessert und es kann bei gegebenem Absorbermaterial, z.B. des Körpers, ein besserer Schallabsorptionsgrad erzielt werden (d. h. es wird mehr Schall oder Schallenergie absorbiert). Optional kann der Flächeninhalt jener Abschnitte der Schallabsorptionsoberfläche, die für aus dem Lärmimmissionsbereich ankommenden Schall direkt erreichbar sind, (insgesamt) zumindest dem 1,2-fachen des Flächeninhalts einer Ansichtsfläche des Wandelements entsprechen.

Weiters kann der Körper eine obere Lagerfläche und eine untere Lagerfläche zum Stapeln mehrerer Wandelemente in eine Stapelrichtung aufweisen, wobei die Lagerflächen zumindest teilweise im Wesentlichen normal auf die Vertikale angeordnet sind. Die Lagerflächen ermöglichen eine aneinander angrenzende Anordnung mehrerer Wandelemente in Richtung der Vertikale, sodass je nach Anzahl der Reihen von Wandelementen eine Lärmschutzwand unterschiedlicher Höhe gebildet werden kann.

Gemäß einem weiteren Ausführungsbeispiel kann die Schallabsorptionsoberfläche in eine Blickrichtung normal auf das Solarmodul durch das Solarmodul zumindest zum überwiegenden Teil verdeckt sein. Unter Annahme eines Lichteinfalls normal auf das Solarmodul (entspricht der optimalen Effizienz) liegt dann die Schallabsorptionsoberfläche zumindest zum überwiegenden Teil im Schatten des Solarmoduls. Diese Anordnung des Solarmoduls und der Schallabsorptionsoberfläche ermöglicht eine besonders hohe Nutzung der einfallenden Sonnenenergie. Es ist dabei unerheblich, ob die Schallabsorptionsoberfläche durch ein Solarmodul desselben Wandelements oder eines entlang der Vertikalen darüber angeordneten, benachbarten oder angrenzenden Wandelements liegt.

Optional kann die Schallabsorptionsoberfläche in einer das Wandelement umfassenden Lärmschutzwand vollständig innerhalb einer Schattenlinie zwischen einer Oberkante eines unteren Solarmoduls und einer Unterkante eines oberen Solarmoduls angeordnet sein. Auf diese Weise kann vermieden werden, dass das Profil der Schallabsorptionsoberfläche die Effizienz der Solarmodule durch Schatten beeinträchtigt.

In diesem Zusammenhang kann gemäß einer speziellen Ausführungsform der Körper auf der zumindest einen Außenseite außerhalb des Solarmoduls zumindest eine Erhebung zur Vergrößerung der Schallabsorptionsoberfläche aufweisen, wobei eine Außenkante der Erhebung die Schattenlinie berührt oder innerhalb der Schattenlinie liegt. Mit einer solchen Erhebung kann der Raum innerhalb der Schattenlinie optimal zur Vergrößerung der Schallabsorptionsoberfläche genutzt werden, ohne die Effizienz eines darunter möglicherweise angeordneten Solarmoduls (desselben oder eines benachbarten Wandelements) zu beeinträchtigen.

Alternativ oder zusätzlich kann der Abstand zwischen in Richtung der Vertikalen benachbarten Solarmodulen einer das Wandelement umfassenden Lärmschutzwand so gewählt sein, dass die Schattenlinie zwischen diesen Solarmodulen im Wesentlichen normal auf die Vorderseite zumindest eines Solarmoduls angeordnet ist. Bei dieser Anordnung wirft unter Annahme eines Lichteinfalls normal auf das Solarmodul (entspricht der optimalen Effizienz) das obere Solarmodul keinen Schatten auf das untere Solarmodul. Es kann somit eine optimale Nutzung der verfügbaren Fotovoltaikfläche erzielt werden.

Weiters kann in einer Seitenansicht auf die Außenseite der Abstand zwischen in Richtung der Vertikalen benachbarten Solarmodulen größer oder gleich dem Abstand zwischen einer Oberkante und einer Unterkante eines Solarmoduls sein. Mit anderen Worten nehmen bei dieser Konfiguration die Solarmodule 50 % oder weniger der Ansichtsfläche ein. Dadurch können sehr flache Neigungswinkel (kleiner als 30°) der Schallabsorptionsoberfläche und damit einhergehend sehr spitze Kanten (weniger als 60° eingeschlossenen Winkel) vermieden werden, welche sich einschränkend auf das für den Körper ohne Gefährdung dessen struktureller Integrität verwendbare Material auswirken könnten.

Der Körper kann beispielsweise im Wesentlichen aus einem schallabsorbierenden Material bestehen. Das schallabsorbierende Material kann zur Bildung einer Trägerstruktur für das Solarmodul geeignet sein. Als schallabsorbierendes Material wird hier ein Material mit einem Schallabsorptionsgrad von z.B. mindestens 4 dB verstanden. Das schallabsorbierende Material kann beispielsweise Holzbeton sein. Im Rahmen der gegenständlichen Offenbarung kann der Körper auch aus einem anderen schallabsorbierenden Material bestehen, wie beispielsweise aus Lochbeton.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Die Zeichnungen zeigen im Einzelnen:
Fig. 1 eine schaubildliche Ansicht einer ersten Ausführungsform des gegenständlichen Wandelements;
Fig. 2 schematisch einen vertikalen Schnitt der ersten Ausführungsform des gegenständlichen Wandelements;
Fig. 3 schematisch einen vertikalen Schnitt einer Lärmschutzwand mit beidseitig angeordneten Wandelementen;
Fig. 4 eine schaubildliche Ansicht eines Wandmoduls mit beidseitig angeordneten Wandelementen; und
Fig. 5 eine schaubildliche Ansicht einer Lärmschutzwand mit beidseitig angeordneten Wandelementen.

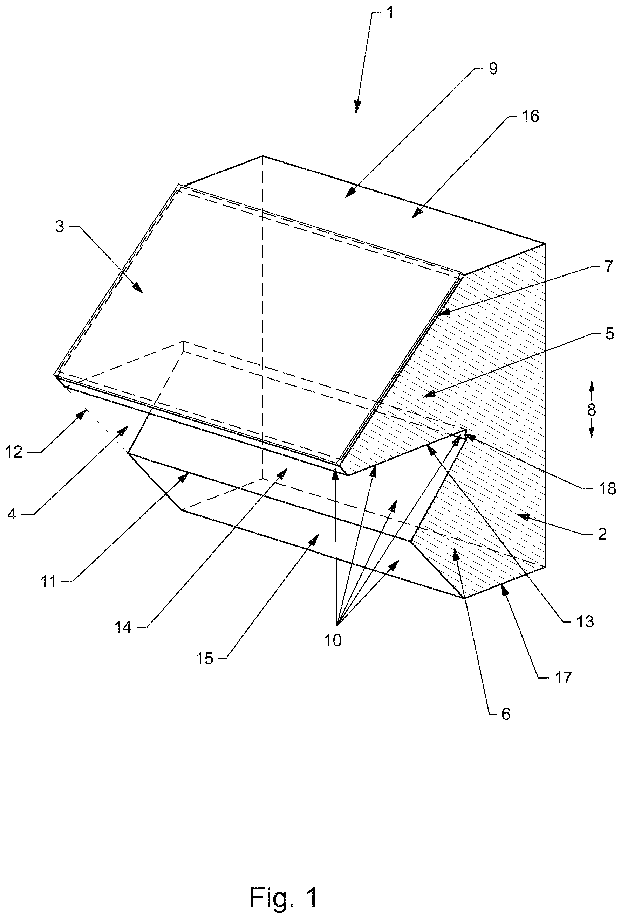

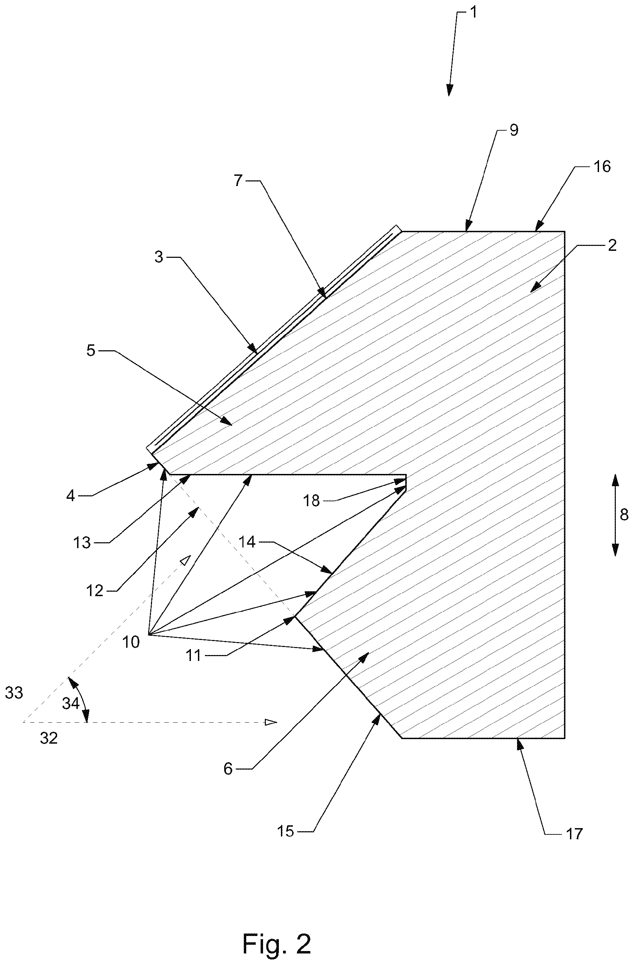

Fig. 1 und Fig.2 zeigen ein Wandelement 1 für eine Lärmschutzwand. Das Wandelement 1 weist einen Körper 2 aus Holzbeton und ein Solarmodul 3 auf. Das Wandelement 1 hat eine Außenseite 4 (auch Vorderseite). Der Körper 2 weist auf der Außenseite 4 zwei Erhebungen 5, 6 oder Vorsprünge auf. Die erste Erhebung 5 bildet zur Außenseite 4 hin ein Auflager 7, auf dem das Solarmodul 3 angeordnet und mit dem Körper 2 verbunden ist. Das Solarmodul 3 ist in Bezug auf eine Vertikale 8 in Richtung einer Oberseite 9 des Wandelements 1 geneigt.

Außerdem weist der Körper 2 auf der Außenseite 4 eine für aus einem Lärmimmissionsbereich entsprechend einem Winkelbereich 34 von normal (d.h. parallel zur Normalen 32) oder bis zu einer Neigung 33 von 45° unter der Normalen 32 auf die Vertikale 8 ankommenden Schall direkt erreichbare Schallabsorptionsoberfläche 10 auf. Die zweite Erhebung 6 ist außerhalb des Solarmoduls 3 angeordnet, genauer abseits oder benachbart dem Solarmodul 3, und dient der Vergrößerung der Schallabsorptionsoberfläche 10, wobei eine Außenkante 11 der Erhebung 6 eine Schattenlinie 12 unterhalb des Solarmoduls 3 berührt, sodass die Erhebung 6 innerhalb der Schattenlinie zu liegen kommt. Die Schallabsorptionsoberfläche 10 ist in eine Blickrichtung normal auf das Solarmodul 3 durch das Solarmodul 3 vollständig verdeckt.

Die Schallabsorptionsoberfläche 10 ist aufgrund der Geometrie der zweiten Erhebung 6 (mit einem Dreiecksprofil) im Wesentlichen in drei Abschnitte 13, 14 und 15 unterteilt, welche in Bezug auf die Vertikale 8 des Wandelements 1 geneigt bzw. normal sind. Der Flächeninhalt der Schallabsorptionsoberfläche 10 ist größer als der Flächeninhalt einer Ansichtsfläche des Wandelements 1, z.B. um ca. das 1,2-fache.

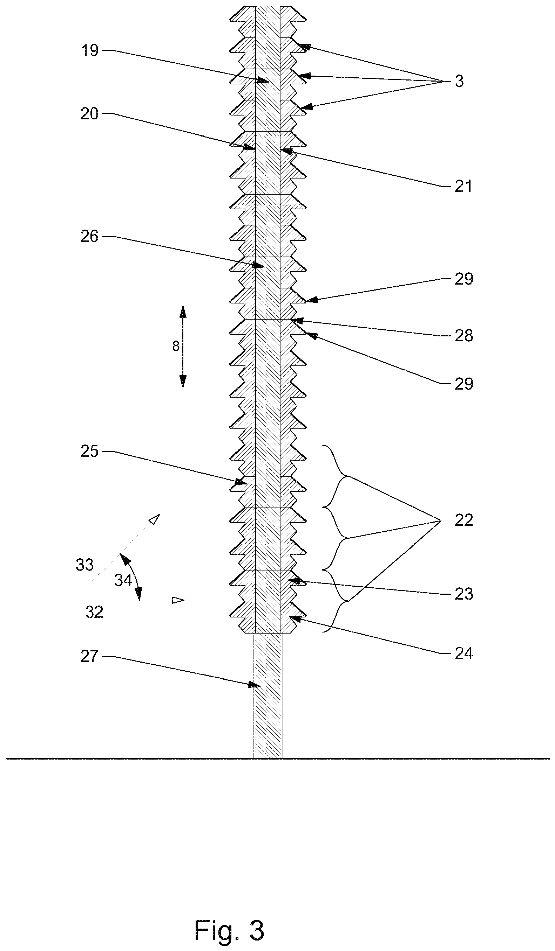

Der Körper 2 weist eine obere Lagerfläche 16 und eine untere Lagerfläche 17 zum Stapeln mehrerer Wandelemente 1 in eine Stapelrichtung auf (vergleiche Fig. 3). Die Lagerflächen 16, 17 sind zum größten Teil im Wesentlichen normal auf die Vertikale 8 angeordnet.

Bei der beschriebenen möglichen Ausführungsform weist die Schallabsorptionsoberfläche 10 neben den drei geneigten bzw. horizontalen Abschnitten 13, 14 und 15 auch einen parallel zur Vertikalen angeordneten vierten Abschnitt 18 zwischen den beiden Erhebungen 5, 6 auf, was den in der Herstellung möglicherweise problematischen spitzen Winkel zwischen den beiden Erhebungen 5, 6 vermeiden soll. Aus demselben Grund ist die Spitze (Außenkante) der ersten Erhebung 5 abgefast.

In Fig. 3 ist eine Lärmschutzwand 19 gezeigt, bei der auf beiden Seiten 20, 21 mehrere Wandelemente 22 vertikal übereinander angeordnet sind. Die einzelnen Wandelemente 22 sind aus zwei Modulen 23, 24 aufgebaut, wobei die einzelnen Module 23, 24 jeweils einem Wandelement 1 gemäß der Ausführungsform gemäß Fig. 1 und Fig. 2 entsprechen, und die beiden Module 23, 24 einen gemeinsamen, durchgängigen Körper 25 aufweisen, sodass zwei Module 23, 24 zusammen ein Wandelement 22 (mit dementsprechend zwei Solarmodulen) bilden. Die Lärmschutzwand 19 weist einen tragenden Kern 26, z.B. aus Stahlbeton oder einer Rahmen-Leichtkonstruktion zwischen Stahlstehern auf (Steherabstand z.B. 165, 200 oder 500 cm), sowie einen Sockelbereich 27 aus Beton auf.

Der Abstand zwischen in Richtung der Vertikalen benachbarten Solarmodulen 3 der Lärmschutzwand 19 ist so gewählt, dass die Schattenlinie 12 zwischen diesen Solarmodulen 3 im Wesentlichen normal auf die Außenseite der in diesem Beispiel parallel angeordneten Solarmodule 3 ist. In einer Seitenansicht auf die Außenseite 4 (nicht dargestellt, aber aus dem dargestellten Profil erkennbar) ist der Abstand zwischen in Richtung der Vertikalen benachbarten Solarmodulen 3 (beispielsweise 14 cm) größer oder gleich dem Abstand zwischen einer Oberkante 28 und einer Unterkante 29 eines Solarmoduls 3 (beispielsweise 11 cm). Die Schallabsorptionsoberflächen 10 der Wandelemente 22 sind jeweils vollständig innerhalb einer Schattenlinie 12 zwischen einer Oberkante 28 eines unteren Solarmoduls 3 und einer Unterkante 29 eines oberen Solarmoduls 3 angeordnet.

Die Wandelemente 22 (mit einer Modulhöhe von beispielsweise 25 cm und einer entsprechenden Elementhöhe von beispielsweise 50 cm) sind gestapelt, sodass sich die Lagerflächen 16, 17 benachbarter Wandelemente 22 berühren. Die Breite der Solarmodule 3 beträgt beispielsweise 16,5 cm. Die einzelnen Wandelemente 22 sind mit dem tragenden Kern 26 verbunden, beispielsweise angeklebt oder angeschraubt.

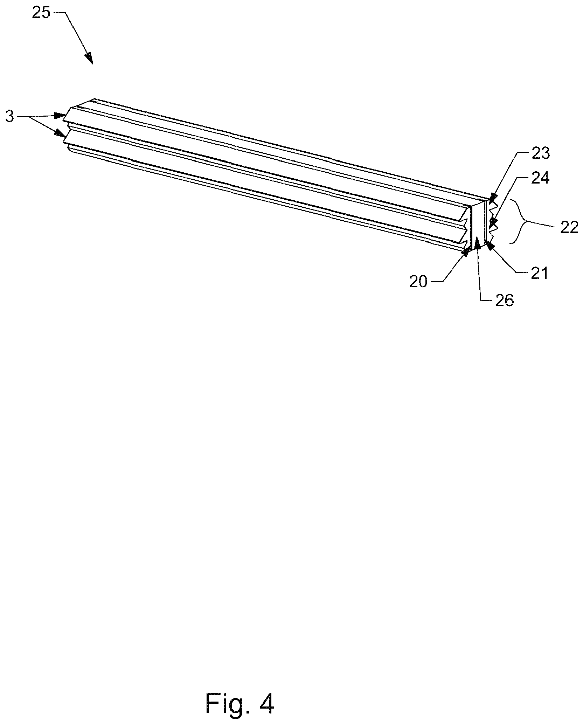

Fig. 4 zeigt schematisch einen Abschnitt der Lärmschutzwand 19 entsprechend einem Wandmodul. Das Wandmodul umfasst einen Abschnitt des Kerns 26. Auf beiden Seiten 20, 21 des Kernabschnitts ist jeweils ein Wandelement 22 mit einem durchgängigen Körper 25 angeordnet. Jedes Bandelement weist dabei zwei Module 23, 24 auf, die jeweils mit einem Solarmodul 3 ausgestattet sind. Das hier dargestellte Wandmodul hat beispielsweise eine Abmessungen entlang der Vertikale 8 (Höhe) von etwa 50 cm. Jedes Modul 23, 24 oder jede Modulreihe ist daher ca. 25 cm hoch. Die Solarmodule 3 sind dabei ca. 16,5 cm breit. Alternativ kann vorgesehen sein, dass ein Wandmodul dieser Höhe drei Modulreihen aufweist, wobei die Solarmodule eine Breite von etwa 12,5 cm haben. Es ist aber auch denkbar, Wandmodul mit nur einer Modulreihe vorzusehen, z.B. mit einer Höhe von 25 cm.

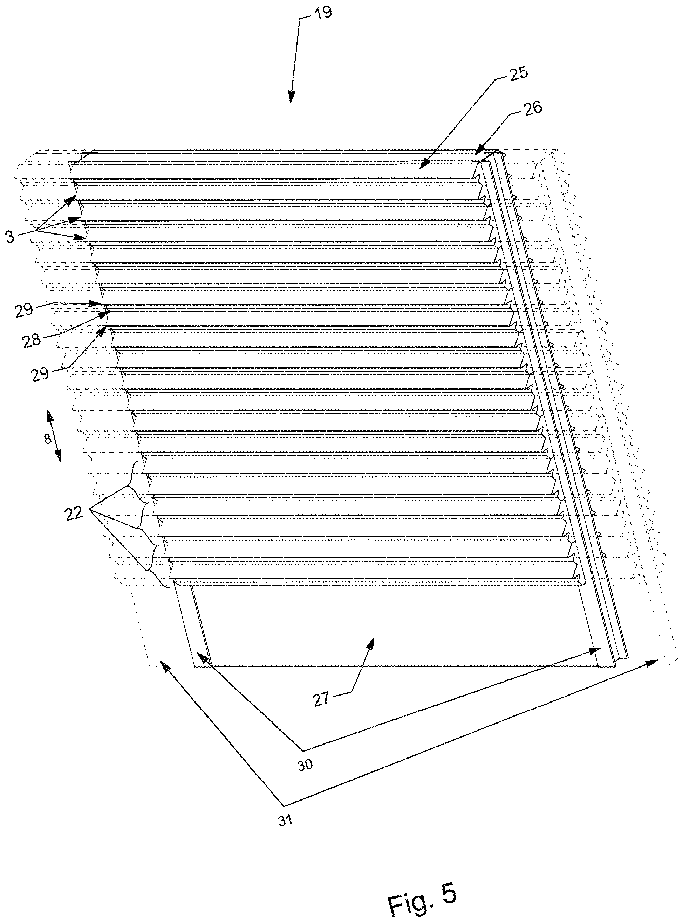

Fig. 5 zeigt eine schaubildliche Ansicht einer Lärmschutzwand 19 mit beidseitig angeordneten Wandelementen vergleichbar Fig. 3. Die Lärmschutzwand 19 ist in Längsrichtung in Abschnitte unterteilt, die jeweils durch Stahlsteher 30 begrenzt sind, gestützt werden und im Boden verankert sind. Die in Längsrichtung benachbarten Lärmschutzwandabschnitte 31 sind in Fig. 5 gestrichelt angedeutet, um die Fortsetzung der Lärmschutzwand durch reihenförmige Wiederholung bzw. Aneinanderreihung mehrerer Lärmschutzwandabschnitte zu illustrieren.

## Patentansprüche

1. Wandelement (1) für eine Lärmschutzwand, wobei das Wandelement (1) einen Körper (2) aufweist und zumindest eine Außenseite (4) hat, wobei der Körper (2) zu der zumindest einen Außenseite (4) hin ein Auflager (7) aufweist, wobei auf dem Auflager (7) zumindest ein Solarmodul (3) angeordnet und mit dem Körper (2) verbunden ist, wobei das Solarmodul (3) in Bezug auf eine Vertikale (8) in Richtung einer Oberseite (9) des Wandelements (1) geneigt ist, wobei der Körper (2) auf der zumindest einen Außenseite (4) zumindest eine für ankommenden Schall direkt erreichbare Schallabsorptionsoberfläche (10) aufweist, **dadurch gekennzeichnet, dass** die Schallabsorptionsoberfläche (10) zumindest abschnittsweise in Bezug auf die Vertikale (8) und/oder in Bezug auf eine Längsrichtung des Wandelements (1) geneigt ist, wobei der Flächeninhalt der Schallabsorptionsoberfläche (10) zumindest gleich groß wie der Flächeninhalt einer Ansichtsfläche des Wandelements (1) ist.

2. Wandelement (1) nach Anspruch 1, **dadurch gekennzeichnet, dass** der Flächeninhalt jener Abschnitte der Schallabsorptionsoberfläche (10), die für aus einem Lärmimmissionsbereich ankommenden Schall direkt erreichbar sind, zumindest gleich groß wie der Flächeninhalt einer Ansichtsfläche des Wandelements (1) ist, wobei der Lärmimmissionsbereich einen Winkelbereich zwischen einer Normale auf die Vertikale und einer um 70° aus dieser Normalen in Richtung einer Unterseite des Wandelements angestellten Neigung umfasst.

3. Wandelement (1) nach Anspruch 1 oder 2, **dadurch gekennzeichnet, dass** der Flächeninhalt der Schallabsorptionsoberfläche (10) ca. dem 1,2-fachen oder mehrfachen des Flächeninhalts einer Ansichtsfläche des Wandelements (1) entspricht.

4. Wandelement (1) nach einem der vorangehenden Ansprüche, **dadurch gekennzeichnet, dass** der Körper (2) eine obere Lagerfläche (16) und eine untere Lagerfläche (17) zum Stapeln mehrerer Wandelemente (1) in eine Stapelrichtung aufweist, wobei die Lagerflächen (16, 17) zumindest teilweise im Wesentlichen normal auf die Vertikale (8) angeordnet sind.

5. Wandelement (1) nach einem der vorangehenden Ansprüche, **dadurch gekennzeichnet, dass** die Schallabsorptionsoberfläche (10) in eine Blickrichtung normal auf das Solarmodul (3) durch das Solarmodul (3) zumindest zum überwiegenden Teil verdeckt ist.

6. Wandelement (1) nach einem der vorangehenden Ansprüche, **dadurch gekennzeichnet, dass** die Schallabsorptionsoberfläche (10) in einer das Wandelement (1) umfassenden Lärmschutzwand vollständig innerhalb einer Schattenlinie (12) zwischen einer Oberkante (28) eines unteren Solarmoduls und einer Unterkante (29) eines oberen Solarmoduls angeordnet ist.

7. Wandelement (1) nach Anspruch 6, **dadurch gekennzeichnet, dass** der Körper (2) auf der zumindest einen Außenseite (4) außerhalb des Solarmoduls (3) zumindest eine Erhebung (6) zur Vergrößerung der Schallabsorptionsoberfläche (10) aufweist, wobei eine Außenkante (11) der Erhebung (6) die Schattenlinie (12) berührt oder innerhalb der Schattenlinie (12) liegt.

8. Wandelement (1) nach einem der Ansprüche 6 oder 7, **dadurch gekennzeichnet, dass** der Abstand zwischen in Richtung der Vertikalen (8) benachbarten Solarmodulen (3) einer das Wandelement (1) umfassenden Lärmschutzwand so gewählt ist, dass die Schattenlinie (12) zwischen diesen Solarmodulen (3) im Wesentlichen normal auf die Vorderseite zumindest eines Solarmoduls (3) angeordnet ist.

9. Wandelement (1) nach einem der vorangehenden Ansprüche, **dadurch gekennzeichnet, dass** in einer Seitenansicht auf die Außenseite (4) der Abstand zwischen in Richtung der Vertikalen (8) benachbarten Solarmodulen (3) größer oder gleich dem Abstand zwischen einer Oberkante (28) und einer Unterkante (29) eines Solarmoduls (3) ist.

10. Wandelement (1) nach einem der vorangehenden Ansprüche, **dadurch gekennzeichnet, dass** der Körper (2) im Wesentlichen aus einem schallabsorbierenden Material besteht, vorzugsweise aus Holzbeton.

## Claims

1. Wall element (1) for a noise protection wall, wherein the wall element (1) has a body (2) and at least one outer side (4), wherein the body (2) has a support (7) towards the at least one outer side (4), wherein at least one solar panel (3) is arranged on the support (7) and is connected to the body (2), wherein the solar panel (3) is inclined relative to a vertical (8) in the direction of an upper side (9) of the wall element (1), wherein the body (2) on the at least one outer side (4) has at least one sound absorption surface (10) which can be reached directly by incoming sound, **characterized in that** the sound absorption surface (10) is inclined at least in some sections relative to the vertical (8) and/or relative to a longitudinal direction of the wall element (1), wherein the area of the sound absorption surface (10) is at least equal to the area of an elevation view of the wall element (1).

2. Wall element (11) according to Claim 1, **characterized in that** the area of those sections of the sound absorption surface (10) which can be reached directly by sound coming from a noise immission area is at least equal to the area of an elevation view of the wall element (1), wherein the noise immission area comprises an angular range between a normal to the vertical and an inclination set at 70° from this normal in the direction of an underside of the wall element.

3. Wall element (1) according to Claim 1 or 2, **characterized in that** the area of the sound absorption surface (10) corresponds to about 1.2 times or multiple times the area of an elevation view of the wall element (1).

4. Wall element (1) according to any one of the preceding claims, **characterized in that** the body (2) has an upper bearing face (16) and a lower bearing face (17) for stacking a plurality of wall elements (1) in a stacking direction, wherein the bearing surfaces (16, 17) are arranged at least partially substantially normal on the vertical (8).

5. Wall element (1) according to any one of the preceding claims, **characterized in that** in a viewing direction normal to the solar panel (3) the sound absorption surface (10) is covered by the solar panel (3) at least for the most part.

6. Wall element (1) according to any one of the preceding claims, **characterized in that** the sound absorption surface (10) is arranged in a noise protection wall comprising the wall element (1) completely within a shadow line (12) between an upper edge (28) of a lower solar panel and a lower edge (29) of an upper solar panel.

7. Wall element (1) according to Claim 6, **characterized in that** on the at least one outer side (4) outside the solar panel (3) the body (2) has at least one elevation (6) for enlarging the sound absorption surface (10), wherein an outer edge (11) of the elevation (6) contacts the shadow line (12) or lies inside the shadow line (12) .

8. Wall element (1) according to any one of Claims 6 or 7, **characterized in that** the distance between adjacent solar panels (3) in the direction of the vertical (8) of a noise protection wall comprising the wall element (1) is selected so that the shadow line (12) between these solar panels (3) is arranged substantially normally on the front side of at least one solar panel (3).

9. Wall element (1) according to any one of the preceding claims, **characterized in that** in an elevation view of the outer side (4) the distance between adjacent solar panels (3) in the direction of the vertical (8) is greater than or equal to the distance between an upper edge (28) and a lower edge (29) of a solar panel (3).

10. Wall element (1) according to any one of the preceding claims, **characterized in that** the body (2) consists substantially of a sound-absorbing material, preferably of wood concrete.

## Revendications

1. Elément mural (1) pour un mur antibruit, dans lequel l'élément mural (1) présente un corps (2) et a au moins une face extérieure (4), dans lequel le corps (2) présente en direction de la au moins une face extérieure (4) un support (7), dans lequel au moins un module solaire (3) est disposé sur le support (7) et est relié au corps (2), dans lequel le module solaire (3) est incliné par rapport à une verticale (8) en direction d'une face supérieure (9) de l'élément mural (1), dans lequel le corps (2) présente sur la au moins une face extérieure (4) au moins une surface d'absorption acoustique (10) pouvant être atteinte directement pour un bruit arrivant, **caractérisé en ce que** la surface d'absorption acoustique (10) est inclinée au moins sur certaines parties par rapport à la verticale (8) et/ou par rapport à une direction longitudinale de l'élément mural (1), dans lequel la superficie de la surface d'absorption acoustique (10) est au moins aussi grande que la superficie d'une face visible de l'élément mural (1).

2. Elément mural (1) selon la revendication 1, **caractérisé en ce que** la superficie des parties de la surface d'absorption acoustique (10) qui peuvent être atteintes directement pour un bruit arrivant d'une zone de nuisances sonores est au moins aussi grande que la superficie d'une face visible de l'élément mural (1), dans lequel la zone de nuisances sonores comprend une plage angulaire comprise entre une normale à la verticale et une inclinaison placée à 70° à partir de cette normale en direction d'une face inférieure de l'élément mural.

3. Elément mural (1) selon la revendication 1 ou 2, **caractérisé en ce que** la superficie de la surface d'absorption acoustique (10) correspond approximativement à 1,2 fois ou plusieurs fois la superficie d'une face visible de l'élément mural (1).

4. Elément mural (1) selon l'une quelconque des revendications précédentes, **caractérisé en ce que** le corps (2) présente une surface d'appui supérieure (16) et une surface d'appui inférieure (17) pour empiler plusieurs éléments muraux (1) dans une direction d'empilement, dans lequel les surfaces d'appui (16, 17) sont disposées au moins en partie sensiblement de manière normale à la verticale (8).

5. Elément mural (1) selon l'une quelconque des revendications précédentes, **caractérisé en ce que** la surface d'absorption acoustique (10) est cachée au moins en grande partie par le module solaire (3) dans une direction d'observation normale au module solaire (3).

6. Elément mural (1) selon l'une quelconque des revendications précédentes, **caractérisé en ce que** la surface d'absorption acoustique (10) est disposée dans un mur antibruit comprenant l'élément mural (1) entièrement à l'intérieur d'une ligne d'ombre (12) entre un bord supérieur (28) d'un module solaire inférieur et un bord inférieur (29) d'un module solaire supérieur.

7. Elément mural (1) selon la revendication 6, **caractérisé en ce que** le corps (2) présente sur la au moins une face extérieure (4) à l'extérieur du module solaire (3) au moins une élévation (6) pour l'augmentation de la surface d'absorption acoustique (10), dans lequel un bord extérieur (11) de l'élévation (6) touche la ligne d'ombre (12) ou se situe à l'intérieur de la ligne d'ombre (12).

8. Elément mural (1) selon l'une quelconque des revendications 6 ou 7, **caractérisé en ce que** la distance entre des modules solaires (3) voisins en direction de la verticale (8) d'un mur antibruit comprenant l'élément mural (1) est choisie de sorte que la ligne d'ombre (12) entre ces modules solaires (3) soit disposée de manière sensiblement normale à la face avant d'au moins un module solaire (3).

9. Elément mural (1) selon l'une quelconque des revendications précédentes, **caractérisé en ce que** dans une vue latérale sur la face extérieure (4) la distance entre des modules solaires (3) voisins en direction de la verticale (8) est supérieure ou égale à la distance entre un bord supérieur (28) et un bord inférieur (29) d'un module solaire (3).

10. Elément mural (1) selon l'une quelconque des revendications précédentes, **caractérisé en ce que** le corps (2) est constitué sensiblement d'un matériau à absorption acoustique, de préférence de béton de bois.
